# EUROPÄISCHE PATENTSCHRIFT

(11) **EP 0 896 782 B1**
(45) Veröffentlichungstag und Bekanntmachung des Hinweises auf die Patenterteilung: **07.12.2005**
(21) Anmeldenummer: 97922893.9
(22) Anmeldetag: 30.04.1997
(51) Int. Cl.: H04Q 7/38, H04Q 7/32

(54) **VERFAHREN ZUR INTEGRATION VON SCHNURLOSTELEFONNETZEN IN ZELLULARE MOBILFUNKNETZE**
PROCESS FOR INTEGRATING CORDLESS TELEPHONE NETWORKS INTO CELLULAR MOBILE TELEPHONE NETWORKS
PROCEDE D'INTEGRATION DE RESEAUX DE TELEPHONES SANS FIL DANS DES RESEAUX RADIOTELEPHONIQUES CELLULAIRES

(30) Priorität: 02.05.1996 DE 19617441
(43) Veröffentlichungstag der Anmeldung: 17.02.1999
(73) Patentinhaber: T-Mobile Deutschland GmbH, 53227 Bonn (DE)
(72) Erfinder: RAMS, Wolfgang, D-53577 Neustadt/Wied (DE)
(74) Vertreter: Riebling, Peter
(86) Internationale Anmeldenummer: PCT/DE1997/000885
(87) Internationale Veröffentlichungsnummer: WO 1997/042785

(56) Entgegenhaltungen:
- EP-A- 0 660 626
- WO-A-93/18606
- WO-A-95/01074

## Beschreibung

Die vorliegende Erfindung betrifft ein Verfahren zur Integration von Schnurlostelefonnetzen, insbesondere nach dem DECT-Standard, in zellulare Mobilfunknetze, insbesondere GSM-Mobilfunknetze.

Bekannte Mobilfunknetze, z.B. nach GSM-Standard, sind zur Versorgung von in Fahrzeuge fest eingebauten Geräten oder kompakter, mobiler Handgeräte vorgesehen. Bekannt sind auch Schurlostelefone nach dem DECT-Standard, die in Festnetzen betrieben werden. Als Mobilfunkvermittlungsstellen nach dem GSM-Standard dienen sogenannte Mobile Service Switching Centres, MSC, die neben Funktionalitäten normaler Vermittlungsstellen zusätzlich die Mobilität der Endgeräte unterstützen. Dabei wird ein spezielles Mobiltitäts-Management, MM angewendet.

Es sind bereits Fälle diskutiert z.T. auch spezifiziert, bei denen man ein DECT-System mit einen GSM-System netzseitig, d.h. über das A-Interface (Schnittstelle zwischen Vermittlungsstelle und Basisstation) oder eine ISDN-Verbindung miteinander verbindet. Eine netzseitige Verbindung zwischen einem GSM-Netz und einem DECT-Netz zu erreichen erfordert jedoch aufwendige Spezifikations- und Entwicklungsarbeit und ist in kurzer Zeit nicht realisierbar. Bestünde die Möglichkeit, bei der Netzverbindung auf bereits existierende Komponenten zurückzugreifen, so wäre eine kurze Realisierungszeit gegeben.

In der Offenlegungsschrift DE 43 44 702 A1 ist ein Verfahren und eine Anordnung zum wechselweisen Betreiben eines mobilen Endgerätes über ein zellulares Mobilfunksystem und ein Schnurlossystem eines Festnetzes beschrieben. Hierbei handelt es sich vornehmlich um eine Rufweiterleitung für den Fall, daß ein Anrufversuch eines Teilnehmers über das Mobilfunknetz scheitert. Es ist eine Alternativrufnummer vorgesehen, auf welche eine Rufweiterleitung geschaltet werden soll, wenn der Teilnehmer unter seiner ursprünglichen Rufnummer nicht erreicht werden kann.
Nachteil des beschriebenen Verfahrens ist die mit der Rufumleitung verbundene, zeitaufwendige Lokalisierung des Mobilfunkteilnehmers. Nur im Falle der Nichterreichbarkeit des Teilnehmers erfolgt eine Rufweiterleitung zu einem vorgegebenen DECT-Netz.

Die WO-A-95 0174 betrifft ein Verfahren für den Rufaufbau in GSM-Mobilfunknetzen, wobei ein Schnurlostelefonsystem in das GSM-Netz eingebunden wird, im Sinne eines Substituts für Basisstationen BTS und Basisstationssteuerungen BSC. Dabei ist die Basisstation des Schnurlostelefonnetzes über eine Mobilvermittlungsstelle an das Mobilfunknetz angebunden und arbeitet daher wie ein Basisstation des Mobilfunknetzes. Befindet sich ein Mobilteilnehmer im Versorgungsbereich seines eigenen Schnurlostelefonnetzes, wird ein Verbindungswunsch für diesen Mobilfunkteilnehmer automatisch auf das Schnurlostelefonnetz geleitet. Es handelt sich also prinzipiell um ein System der Rufumleitung, bei dem Rufe an das Mobilfunkendgerät an das Schnurlostelefonendgerät umgeleitet werden, falls sich der Mobilfunkteilnehmer im Versorgungsbereich dieses Schnurlostelefonnetzes befindet. Ferner sind zur Realisierung dieses Verfahrens Modifikationen von bestehenden Netzkcmponenten erforderlich, um Zugriff auf das Mobility-Management des Mobilfunknetzes zu erreichen.

Die EP-A-A660 626 betrifft ein Multi-Modefunktelefon, welches in der Lage ist, mit zwei oder mehreren verschiedenen Mobilkommunikationssystemen zusammenzuarbeiten. Dabei überwacht das Endgerät die Signale der verschiedenen Mobilfunknetze und schaltet sich automatisch auf dasjenige Netz, welches die qualitativ beste und/oder kostengünstigste Verbindungsmöglichkeit bereitstellt.

Aufgabe der Erfindung ist es, ein Verfahren zur Integration von Schnurlostelefonnetzen in zellulare Mobilfunknetze vorzuschlagen, das es erlaubt, den Teilnehmer wann immer möglich direkt über das für ihn günstigere Netz zu versorgen.

Gelöst wird diese Aufgabe durch die technische Lehre des Anspruchs 1.

Setzt man eine nahezu flächendeckende Versorgung durch ein GSM-Netz voraus, so ist es erfindungsgemäß möglich, die GSM-interne Mobilitäts-Management Funktion dem DECT-Netz über das GSM-Air-Interface zugänglich zu machen.
Grundgedanke der Erfindung ist, daß ein Teilnehmer, der über ein Zweisysteme-Endgerät verfügt, immer im aktuell günstigeren Netz erreichbar ist dort direkt angerufen wird, indem ausgehend von zunächst GSM-Betrieb das Endgerät permanent prüft, ob der Teilnehmer.sich in einem durch ein DECT-Netz versorgten Gebiet aufhält. Ist dies der Fall, so wird durch das Endgerät weiterhin geprüft, ob der Teilnehmer zum entsprechenden DECT-Netz zugangsberechtigt ist. Ist auch diese Bedingung erfüllt, so initiiert das Endgerät eine Ortsaktualisierungsprozedur (Location Update Procedure) so daß das GSM-Netz den augenblicklichen Standort (LocationArea) des Teilnehmers feststellen kann.
Nachdem das Location Update erfolgreich durchgeführt ist, kann das Endgerät in den entsprechenden DECT-Modus übergehen. Geht nun ein Anruf für den Teilnehmer ein, so wird der aktuelle Standort des Teilnehmers mit vorab gespeicherten Standortdaten verglichen, denen entsprechende Rufnummern einzelner DECT-Netze zugeordnet sind. Die Vermittlungsstelle (MSC) des GSM-Netzes "weiß" nun, daß der Teilnehmer unter dem entsprechenden DECT-Netz erreichbar ist und leitet einen Verbindungsaufbau unter Zuhilfenahme des GSM-Mobilitäts-Managements direkt zur Rufnummer der entsprechenden DECT-Netzes ein. Abgehende Gespräche vom Teilnehmer werden direkt über das DECT-Netz abgewickelt. Erfindungsgemäß lassen sich private DECT-Anlagen sinnvoll mit GSM-Mobilfunkanlagen kombinieren. Eine Kommunikation über ein DECT-Netz bietet dem Teilnehmer wesentliche Vorteile:
- hohe Sprachqualität, durch schnurlose Festnetzverbindung
- hohe Verkehrsdichte auf engem Raum , störungsfrei
- geringere Gesprächskosten für den Teilnehmer, da Festnetztarife

Weiterer Vorteil ist die volle Integration beliebiger DECT-Netze in das GSM-Netz mit nur geringen Modifikationen an den Netzen und Endgeräten. Die Endgerätetechnologie ist bereits bereitgestellt, die netzseitige Standardisierung ist bis auf einige Bereiche abgeschlossen.

Die durch DECT-Netze versorgte Bereiche werden als "Inseln" im GSM Netz angesehen. Die Inseln verfügen über GSM-Versorgung, bieten aber zusätzlich die Möglichkeit, die kostengünstiger und qualitativ bessere DECT-Technik zu nutzen. Besitzen Teilnehmer Zugang zu diesen DECT-Netzen (je nach Teilnehmerprofil auch mehrere Inseln an verschiedenen Standorten möglich) kann dieser Teilnehmer das DECT-Netz nutzen. Wollte ein Teilnehmer bisher beide Netze nutzen, benötigte er zwei Endgeräte, ein GSM-kompatibles und ein DECT-kompatibles Gerät. Da es aufgrund der möglichen Vielzahl der Inseln nicht möglich ist, eine gewöhnliche Rufweiterleitung an einen unbekannten Ort zu realisieren, ist es erfindungsgemäß vorgesehen, daß das GSM-Netz in Form eines Eintrags im Heimatregister (HLR) über den augenblicklichen Aufenthaltsort des Teilnehmers informiert ist.

Ähnlich wie im GSM-Netz muß also das Endgerät, sobald es eine Standortänderung feststellt, diese Änderung dem HLR des GSM-Netzes mitteilen, damit dem Netz bekannt ist, in welchem Standortbereich (LocationArea) der Teilnehmer sich aufhält. Die Kenntnis des HLR über den Aufenthaltsort muß dann einer der LocationArea zugeordneten Rufnummer zugeordnet werden, um einen Anruf des Teilnehmers entsprechend zu adressieren. Voraussetzung für die Nutzung der vorhandenen GSM-Infrastruktur ohne Modifikation derselben ist, daß die DECT-Netze einem ihnen eigenen Standortbereich (LocationArea) zugeordnet werden können. Mit dieser LocationArea in Verbindung mit einem Kunden steht dann eine entsprechende Rufnummer in Verbindung.

Bezüglich der Location Update Procedure und der Benachrichtigung des HLR über der Aufenthaltsort des Teilnehmers sind verschiedenen Szenarien denkbar:
a) Tatsächliche Verwendung der aus GSM bekannten Location Update Procedure.
b) Einrichten bzw. Ausschalten einer Rufumleitung (call forwarding unconditional).
c) Short-Message an ein neu einzurichtendes, intelligentes Netzelement, dem damit die neue Rufnummer mitgeteilt wird.
d) Ruf an ein neu einzurichtendes, intelligentes Netzelement, dem dann mittels DTMF-Tönen die neue Rufnummer mitgeteilt wird.
e) Modifikation der GSM-Spezifikation, um speziell die DECT-GSM Roaming Funktionalität zu unterstützen.

Weitere Merkmale der Erfindung gehen aus den Unteransprüchen hervor.

So wird durch das Endgerät laufend geprüft, ob es sich in einem durch ein Schnurlostelefonnetz versorgten Gebiet befindet. Das ist die Voraussetzung für Schnurlostelefonbetrieb. Falls sich das Endgerät in einem durch ein Schnurlostelefonnetz versorgten Gebiet befindet und der Teilnehmer im entsprechenden Netz zugelassen ist, wird durch das Endgerät im Mobilfunknetz eine Ortsaktualisierung (Location Update Procedure) initiiert, um den Aufenthaltsort des Teilnehmers zu bestimmen. Der aktuelle Aufenthaltsort des Teilnehmers wird als Eintrag im Heimatregister (HLR, bei GSM) des Mobilfunknetzes abgelegt und laufend aktualisiert. Nach erfolgreicher Ortsaktualisierung geht das Endgerät wahlweise oder automatisch vom Mobilfunkbetrieb in den Schnurlostelefonbetrieb über.

Die Zulässigkeit des Teilnehmers im Schnurlostelefonnetz kann durch Versuch eines Verbindungsaufbaus oder entsprechende Systemkennungen geprüft werden, wie sie auch im Mobilfunkbereich angewendet werden. Jedem für den Teilnehmer zulässigen Schnurlostelefonnetz ist eine eigene Rufnummer zugeordnet, die dem Mobilfunknetz bekannt ist, und unter der der Teilnehmer im betreffenden Schnurlostelefonnetz erreichbar ist.

Über das Schnurlostelefonnetz eingehende Anrufe werden direkt auf das Endgerät geleitet, sofern sich der Teilnehmer im Versorgungsbereich des Schnurlostelefonnetzes befindet.

Der Verbindungsaufbau zwischen Mobilfunknetz und Schnurlostelefonnetz erfolgt bei GSM-Netzen mittels des Mobilitäts-Mangagement-Moduls, wobei die Zahl der möglichen, integrierbaren Schnurlostelefonnetze beliebig ist.

## Patentansprüche

1. Verfahren zur Integration von Schnurlostelefonnetzen in zellulare Mobilfunknetze unter Anwendung von Zweisysteme-Endgeräten, die sowohl Kommunikation über das Schnurlostelefonnetz als auch über das Mobilfunknetz unterstützen, wobei das Mobilfunknetz jedem von einem bestimmten Teilnehmer nutzbaren Schnurlostelefonnetz einen eigenen Standortbereich zuordnet, dem wiederum eine teilnehmerspezifische Rufnummer zugeordnet wird, wobei fortlaufend geprüft wird, ob sich der Teilnehmer im Versorgungsbereich eines für ihn nutzbaren Schnurlostelefonnetzes aufhält,
**dadurch gekennzeichnet,**
**daß** falls sich das Endgerät in einem durch ein Schnurlostelefonnetz versorgten Gebiet befindet und der Teilnehmer im entsprechenden Netz zugelassen ist, durch das Endgerät im Mobilfunknetz eine Ortsaktualisierung initiiert wird, und bei eingehenden Anrufen über das Mobilfunknetz wahlweise oder automatisch durch eine Mobilfunk-Vermittlungsstelle anhand der der LocationArea zugeordneten Rufnummer ein Verbindungsaufbau erfolgt.

2. Verfahren nach Anspruch 1, **dadurch gekennzeichnet, daß** der aktuelle Aufenthaltsort des Teilnehmers als Eintrag im Heimatregister des Mobilfunknetzes abgelegt.wird und laufend aktualisiert wird.

3. Verfahren nach einem der Ansprüche 1 oder 2, **dadurch gekennzeichnet, daß** nach erfolgreicher Ortsaktualisierung das Endgerät wahlweise oder automatisch vom Mobilfunkbetrieb in den Schnurlostelefonbetrieb übergeht.

4. Verfahren nach einem der Ansprüche 1 bis 3, **dadurch gekennzeichnet, daß** die Zulässigkeit des Teilnehmers im Schnurlostelefonnetz durch Versuch eines Verbindungsaufbaus oder entsprechende Systemkennungen geprüft wird.

5. Verfahren nach einem der Ansprüche 1 bis 4, **dadurch gekennzeichnet, daß** jedem für den Teilnehmer zulässigen Schnurlostelefonnetz eine eigene Rufnummer zugeordnet ist, die dem Mobilfunknetz bekannt ist, und unter der der Teilnehmer im betreffenden Schnurlostelefonnetz erreichbar ist.

6. Verfahren nach einem der Ansprüche 1 bis 5, **dadurch gekennzeichnet, daß** über das Schnurlostelefonnetz eingehende Anrufe direkt auf das Endgerät geleitet werden, sofern sich der Teilnehmer im Versorgungsbereich des Schnurlostelefonnetzes befindet.

7. Verfahren nach einem der Ansprüche 1 bis 6, **dadurch gekennzeichnet, daß** der Verbindungsaufbau zwischen Mobilfunknetz und Schnurlostelefonnetz mittels des Mobilitäts-Mangagement-Moduls des Mobilfunknetzes erfolgt.

8. Verfahren nach einem der Ansprüche 1 bis 7, **dadurch gekennzeichnet, daß** die Zahl der möglichen, integrierbaren Schnurlostelefonnetze beliebig ist.

9. Verfahren nach einem der Ansprüche 1 bis 8, **dadurch gekennzeichnet, daß** das Mobilfunknetz ein GSM-Mobilfunknetz ist.

10. Verfahren nach einem der Ansprüche 1 bis 9, **dadurch gekennzeichnet, daß** das Schnurlostelefonnetz ein DECT-Schnurlostelefonnetz ist.

## Claims

1. Process for the integration of cordless telephone networks into cellular mobile radiocommunications networks using double-system terminal equipment which support both communication via the cordless telephone network and via the mobile radiocommunications network, wherein the mobile radiocommunications network assigns a separate location area to each cordless telephone network which can be used by a certain subscriber, to which location area in turn a subscriber-specific dial number is assigned, wherein a check is continuously made whether the subscriber stays in the supply area of a cordless telephone network which can be used for him, **characterised in that** if the terminal equipment is situated in an area supplied by a cordless telephone network and the subscriber is authorised in the corresponding network, a location update is initiated by the terminal equipment in the mobile radiocommunications network, and for in-coming calling via the mobile radiocommunications network, a connection set-up takes place optionally or automatically by a mobile radiocommunications exchange using the dial number assigned to the location area.

2. Process according to claim 1, **characterised in that** the current stay location of the subscriber is filed as an entry in the home register of the mobile radiocommunications network and is continuously updated.

3. Process according to one of claims 1 or 2, **characterised in that** after successful location updating, the terminal equipment transfers optionally or automatically from mobile radiocommunications operation to cordless telephone operation.

4. Process according to one of claims 1 to 3, **characterised in that** the validity of the subscriber in the cordless telephone network is checked by attempting a connection set-up or corresponding system identifications.

5. Process according to one of claims 1 to 4, **characterised in that** a separate dial number, which is known to the mobile radiocommunications network and at which the subscriber in the relevant cordless telephone network can be reached, is assigned to each cordless telephone network which is authorised for the subscriber.

6. Process according to one of claims 1 to 5, **characterised in that** calls coming in via the cordless telephone network are passed directly to the terminal equipment, provided the subscriber is situated in the supply region of the cordless telephone network.

7. Process according to one of claims 1 to 6, **characterised in that** the connection set-up between mobile radiocommunications network and cordless telephone network takes place by means of the mobility-management module of the mobile radiocommunications network.

8. Process according to one of claims 1 to 7, **characterised in that** the number of possible cordless telephone networks which can be integrated is open.

9. Process according to one of claims 1 to 8, **characterised in that** the mobile radiocommunications network is a GSM mobile radiocommunications network.

10. Process according to one of claims 1 to 9, **characterised in that** the cordless telephone network is a DECT cordless telephone network.

## Revendications

1. Procédé d'intégration de réseaux de téléphones sans fil dans des réseaux radiotéléphoniques cellulaires à l'aide de terminaux à deux systèmes qui favorisent la communication aussi bien par le réseau de téléphones sans fil que par le réseau radiotéléphonique mobile, le réseau mobile affectant à chaque réseau de téléphones sans fil utilisable par un abonné défini une zone de position propre à laquelle est attribué un numéro d'appel propre à l'abonné, étant précisé que l'on vérifie continuellement si l'abonné se trouve dans la zone de couverture d'un réseau de téléphones sans fils utilisable pour lui,
**caractérisé en ce qu'**au cas où le terminal se trouve dans une zone couverte par un réseau de téléphones sans fil et où l'abonné est autorisé dans le réseau correspondant, une actualisation de position est lancée par le terminal dans le réseau mobile, et en cas d'appels entrants, une communication est établie par l'intermédiaire du réseau mobile, sélectivement ou automatiquement grâce à un central de commutation mobile à l'aide du numéro d'appel attribué à la zone de position.

2. Procédé selon la revendication 1, **caractérisé en ce que** la position actuelle de l'abonné est mémorisée sous la forme d'un enregistrement dans l'enregistreur de localisation nominal du réseau mobile et est actualisée en permanence.

3. Procédé selon la revendication 1 ou 2, **caractérisé en ce qu'**après une actualisation de position réussie, le terminal passe sélectivement ou automatiquement du mode mobile au mode sans fil.

4. Procédé selon l'une des revendications 1 à 3, **caractérisé en ce que** la qualité d'abonné autorisé dans le réseau de téléphones sans fil est contrôlée grâce à un essai d'établissement de communication ou à des identifications de système correspondantes.

5. Procédé selon l'une des revendications 1 à 4, **caractérisé en ce qu'**à chaque réseau de téléphones sans fil autorisé pour l'abonné est attribué un numéro d'appel propre qui est connu du réseau mobile et grâce auquel l'abonné peut être joint dans le réseau sans fil concerné.

6. Procédé selon l'une des revendications 1 à 5, **caractérisé en ce que** les appels arrivant par le réseau sans fil sont acheminés directement vers le terminal dans la mesure où l'abonné se trouve dans la zone de couverture du réseau sans fil.

7. Procédé selon l'une des revendications 1 à 6, **caractérisé en ce que** l'établissement de la communication entre le réseau mobile et le réseau sans fil se fait à l'aide du module de gestion de mobilité du réseau mobile.

8. Procédé selon l'une des revendications 1 à 7, **caractérisé en ce que** le nombre de réseaux sans fil intégrables possibles est arbitraire.

9. Procédé selon l'une des revendications 1 à 8, **caractérisé en ce que** le réseau mobile est un réseau mobile GSM.

10. Procédé selon l'une des revendications 1 à 9, **caractérisé en ce que** le réseau de téléphones sans fil est un réseau DECT.
